# EUROPÄISCHE PATENTSCHRIFT

(11) **EP 2 319 752 B1**
(45) Veröffentlichungstag und Bekanntmachung des Hinweises auf die Patenterteilung: **15.06.2022**
(21) Anmeldenummer: 10013841.1
(22) Anmeldetag: 21.10.2010
(51) Int. Cl.: B62M 9/12, B62M 9/10

(54) **MEHRFACH-RITZELANORDNUNG FÜR FAHRRÄDER**
MULTI-GEAR PINION ASSEMBLY FOR BICYCLES
AGENCEMENT DE PIGNON MULTIPLE POUR VÉLOS

(30) Priorität: 04.11.2009 DE 102009051928; 15.07.2010 DE 102010027228
(43) Veröffentlichungstag der Anmeldung: 11.05.2011
(73) Patentinhaber: SRAM Deutschland GmbH, 97424 Schweinfurt (DE)
(72) Erfinder: Braedt, Henrik, 97218 Gerbrunn (DE)

(56) Entgegenhaltungen:
- GB-A- 704 207
- GB-A- 2 109 892
- US-A1- 2003 073 531
- US-A1- 2005 272 546
- US-A1- 2008 004 143
- US-A1- 2008 188 336
- US-A1- 2009 191 996
- US-A1- 2009 215 566
- Edward Williams: "EDWARD WILLIAMS", , 30 December 1922 (1922-12-30), XP055355934, BIRMINGHAM Retrieved from the Internet: URL:https://occhiolungo.files.wordpress.co m/2012/12/sprockets.png [retrieved on 2017-03-17]
- Wright ET AL: "The silver king", , 30 December 1937 (1937-12-30), XP055355992, Retrieved from the Internet: URL:http://www.oldbike.eu/museum/wp-conten t/uploads/2012/02/1936_Silverking_Flocycle _33.jpg [retrieved on 2017-03-17]
- Martin Klein: "Klein Einführung in die DIN-Normen", , 1 January 2013 (2013-01-01), XP055624660, ISBN: 978-3-322-92719-4 Retrieved from the Internet: URL:https://books.google.nl/books/about/Ei nf%C3%BChrung_in_die_DIN_Normen.html?id=r3 irIpteJZIC&redir_esc=y [retrieved on 2019-09-20]

## Beschreibung

Der Gegenstand des Patentes ist eine Anordnung eines Mehrfachritzels auf einem Freilaufkörper an der Hinterradnabe eines Fahrrades. Ein Freilaufkörper ist drehbar gegenüber der Nabenachse abgestützt und wird in der Regel durch einen Antreiber einer Kassettennabe oder durch einen Außenring eines an der Nabenhülse anschraubbaren Freewheels gebildet, die eine Drehkopplung gegenüber einer Nabenhülse in Vorwärtsdrehrichtung aufweisen sowie in Rückwärtsdrehrichtung gegenüber der Nabenhülse frei drehbar sind.

Ritzel am hinteren Laufrad sind Hauptbestandteile des Antriebsstranges von modernen Mountain-Bikes und Rennrädern. Mittlerweile werden bis zu elf Ritzeln in einer Mehrfach-Ritzelanordnung angeboten.

Die Ritzel gehören zu den hoch belasteten Komponenten und sind Verschleißteile. Konventionelle Ritzel weisen an ihrer Innenkontur ein Mitnahmeprofil auf, an dem eine Mitnahmeverbindung zu einem Antreiber einer Kassettennabe oder zum Außenring eines Freewheels besteht. Die Zuordnung von benachbarten Ritzeln in Umfangsrichtung, die beim Vorgang des Umlegens der Kette von einem Ritzel zum benachbarten Ritzel von entscheidender Bedeutung ist, ergibt sich dadurch, wie Mitnahmeprofile der Ritzel am Antreiber bzw. dem Außenring des Freewheels in Eingriff sind. Weiterhin unterliegen die Ritzel infolge von schrägen Kettenzugskräften einer Biegebelastung, die nachteilig beim Schaltprozess in Erscheinung tritt.

Eine Entwicklungstendenz bei Mehrfach-Ritzelanordnungen ist die Gewichtsreduzierung. Zum Erreichen dieser Zielsetzung bei Erfüllung der genannten Grundanforderungen sind Tragkörper - sogenannte Spider - zwischen Antreiber und Ritzel eingeführt worden. Die mit diesem Prinzip erreichbaren Gewichtsreduzierungen sind aber begrenzt.

Um dem Problem des seitlichen Verbiegens von einzelnen Ritzeln entgegenzuwirken, sind Verbindungsstifte (Pins) eingeführt worden, um die Ritzel gegeneinander abzustützen. Es liegen hierzu für die Anwendung an eine Freewheel das Dokument JP 59-165293 und für die Anwendung an einer Kassettennabe die Dokumente DE 10 2007 010 456 und DE 10 2007 006 852 vor. Schließlich ist in der DE 102 60 565 eine Ritzelanordnung mit Spider bekanntgeworden, in der zusätzlich zu zwei Ritzeln ein drittes Ritzel durch Vernieten mit dem größten Ritzel verbunden ist.

In der EP 2 045 181 ist eine Anordnung von mehreren Einzelritzeln offenbart, in der einzelne Ritzel sich am Antreiber radial abstützen und miteinander verbunden sind, unter Einbeziehung eines Abstandselementes, an dem die Einzelritzel befestigt sind. Die Lochungen in den Einzelritzeln sind vorgegeben durch die Gestaltung des Abstandselementes und die dort befindlichen Lochungen.

Ein anderer Ansatz wurde mit der Kompakt-Ritzelanordnung aus der DE 10 2008 010 904 gewählt, die in Hinsicht auf minimales Gewicht optimiert ist. Die einzelnen Ritzel sind einstückig aus einem einzigen Rohling durch Dreh- und Fräsoperationen herausgearbeitet. Dabei handelt es sich um eine Zähnezahlabstufung mit größeren Differenzen der Zähnezahlen, wie sie vorrangig bei der Verwendung für ein Mountainbike zum Einsatz kommen. Das Patentdokument US 2008/004143 A1 zeigt eine Mehrfach-Ritzelanordnung mit den Merkmalen des Oberbegriffs von Anspruch 1.

Die Tragstruktur der Kompakt-Ritzelanordnung ergibt insgesamt einen Hohlkörper in Form eines Konus. Es ist weder jedes Ritzel für sich allein, noch sind mehrere Ritzel an einem "Spider"-Adapter gegenüber einem Antreiber an der Hinterradnabe abgestützt. Stattdessen ist der gesamte Konus-Hohlkörper nur an zwei axial voneinander beabstandeten Positionen mit dem Antreiber in Kontakt und stützt sich dort ab. Der Konus-Hohlkörper setzt sich aus Stabelementen zusammen, die sich in rohrförmigen und in scheibenförmigen Raumbereichen erstrecken. Die Freiräume zwischen den Stabelementen sind geeignet, die Passage von Schmutz und Schlamm zu ermöglichen, wie sie bei der Benutzung im Gelände auch auf das Mehrfachritzel einwirken. Durch die Freiräume können Schmutzansammlungen unterhalb der am Ritzel angreifenden Kette vermieden werden. Andernfalls kann es dazu kommen, dass die Kette die am Ritzel anhaftenden Schmutzpartikel nach innen transportiert und dort zusammenpresst und verfestigt. Die verfestigten Schmutzansammlungen können in radialer Richtung immer weiter anwachsen und die Kette immer weiter nach außen drücken, bis die Kette nicht mehr ordnungsgemäß zum Eingriff an den Ritzelzähnen kommt und schließlich überspringt. Das muss auf jeden Fall ausgeschlossen werden und wird auch erreicht durch Durchbrüche in der hohlzylinderförmigen Tragstruktur radial unterhalb der Kettenrollen.

Trotz ihres sehr geringen Gewichts ist die Tragstruktur ausreichend steif und fest, so dass störende große Deformationen sowie Brüche infolge des Wirkens der Antriebskraft in der Kette vermieden werden können.

Nachteilig ist bei der beschriebenen Kompakt-Ritzelanordnung der hohe Aufwand bei der Fertigung durch die spanenden Fertigungsverfahren Drehen und Fräsen. Es ist somit die Zielsetzung der Erfindung, eine Ritzelanordnung zu schaffen, die sowohl ein geringes Gewicht aufweist, die Festigkeits- und Steifigkeitsanforderungen erfüllt sowie auch einfach und kostengünstig herzustellen ist. Gelöst wird diese Aufgabenstellung dadurch, dass Einzelritzel mittels Stiften verbunden werden, wobei die Stifte den Zähnen am kleineren Ritzel zugeordnet sind und sehr weit radial außen und nahe zur Lastflanke an den Zähnen, an der die Rolle der eingreifenden Rollenkette in Kontakt ist, in Lochungen eingepresst werden. Die Stifte können nur so weit radial außen angeordnet werden, solange sie nicht mit den Kettenlaschen beim Eingriff der Kette kollidieren.

Aufbau und Funktion der erfindungsgemäßen Mehrfach-Ritzelanordnung wird nun am Beispiel der bevorzugten Ausführungsform beschrieben.
- Fig. 1: Längsschnitt entlang der Drehachse einer erfindungsgemäßen Ritzelanordnung
- Fig. 2: Perspektivische Ansicht der Ritzelanordnung nach Fig. 1, gesehen von der Seite des größten Ritzels, dargestellt ohne Stifte zwischen den Ritzeln
- Fig. 3: Ausschnitt aus der Ritzelanordnung nach Fig. 2 mit der Darstellung der Ritzel mit 28 und 32 Zähnen
- Fig. 4: Ausschnitt des Außenringes einer Ritzelanordnung nach Fig. 1 mit der Stiftverbindung zwischen zwei Ritzeln im Detail, betrachtet von der Seite des größeren Ritzels
- Fig. 5: kleineres Einzelritzel
- Fig. 6: größeres Einzelritzel

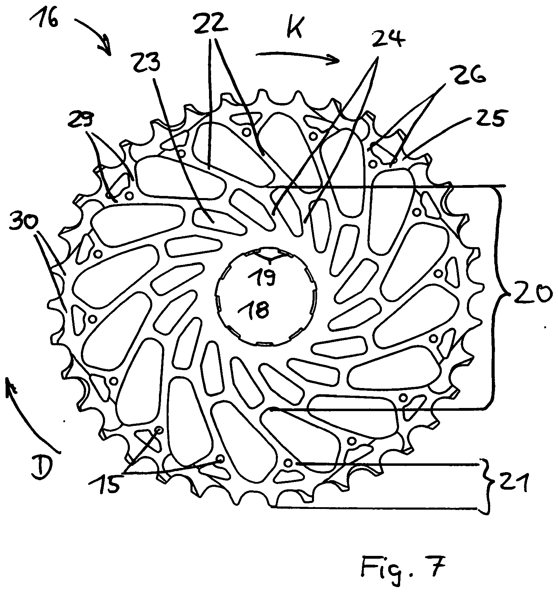

- Fig. 7: Abschlussritzel für die Ritzelanordnung nach Fig. 1 in einer bevorzugten Ausführungsform
- Fig. 8: Einpressen des Stiftes 7 in einem großen Ritzel 2 in einem ersten Montageschritt
- Fig. 9: Aufpressen des kleinen Ritzels 1 auf die Stifte 7 an einem großen Ritzel

In der Beschreibung der bevorzugten Ausführungsform werden ein großes Einzelritzel 2 und ein kleines Einzelritzel 1 herausgegriffen, um auf die Verhältnisse der Verbindungselemente zwischen ihnen einzugehen. Beide Einzelritzel 1, 2 haben grundsätzlich denselben Aufbau. Sie sind jeweils sowohl als großes oder als kleines Ritzel zu betrachten, in Abhängigkeit von dem zusätzlich mit betrachteten nächst kleineren oder nächst größeren Nachbarritzel.

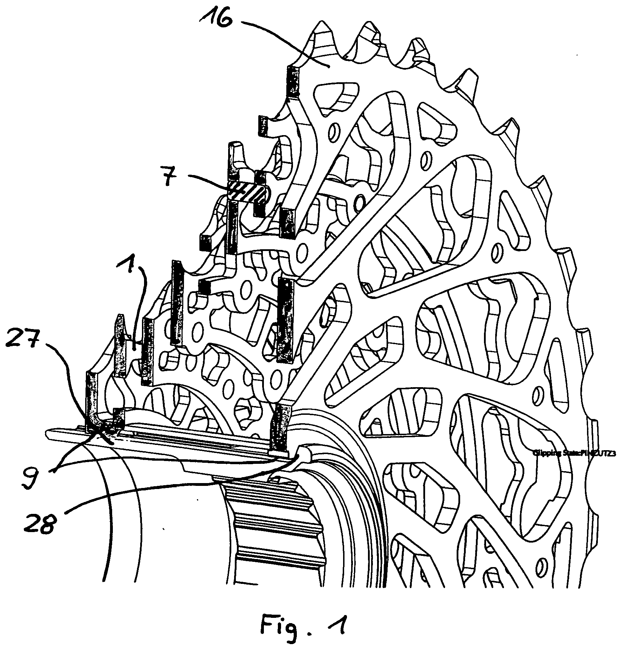

Fig. 1 zeigt die Ritzelanordnung montiert am Antreiber 27 einer Kassettennabe im Längsschnitt entlang der Drehachse. Das Abschlussritzel 16 ist das Ritzel mit der größten Zähnezahl und hat eine von den übrigen Ritzeln abweichende Gestaltung. Die gesamte Mehrfach-Ritzelanordnung stützt sich an den Radialabstützungen 9 radial zur Drehachse des Antreibers 27 und der Ritzel 1, 2 am Antreiber 27 ab. Die Anordnung der Radialabstützungen 9 am Abschlussritzel 16 und am kleinsten Ritzel ist die bevorzugte Ausführungsform. Die Radialabstützungen 9 können aber auch an anderen Ritzeln angeordnet sein, die dann als Stützritzel 32 ausgebildet sind. In Axialrichtung wird die Ritzelanordnung an einem Anschlag 28 des Antreibers 27 positioniert. Die Verbindung zwischen den Ritzeln 1, 2 wird durch Stifte 7 hergestellt.

Die gesamte Ritzelanordnung könnte auch auf einem Außenring 3 eines Freewheel angeordnet sein, der in Rückwärtsdrehrichtung gegenüber dem inneren Ring des Freewheel drehbar gelagert ist und einen Freilauf zwischen Aussen- und Innenring aufweist.

In Fig. 1 ist ersichtlich, dass die erfindungsgemäße Mehrfach-Ritzelanordnung auch schwebend verbundene Ritzel 36 aufweist, die sich selbst nicht am Freilaufkörper abstützen, und die auch nicht an benachbarten Ritzeln montiert sind, die sich am Freilaufkörper abstützen. So ergibt sich für ein schwebend verbundenes Ritzel lediglich eine Abstützung über ein erstes sich direkt am Freilaufkörper abstützendes Ritzel und über ein zweites, am ersten Ritzel montiertes Ritzel.

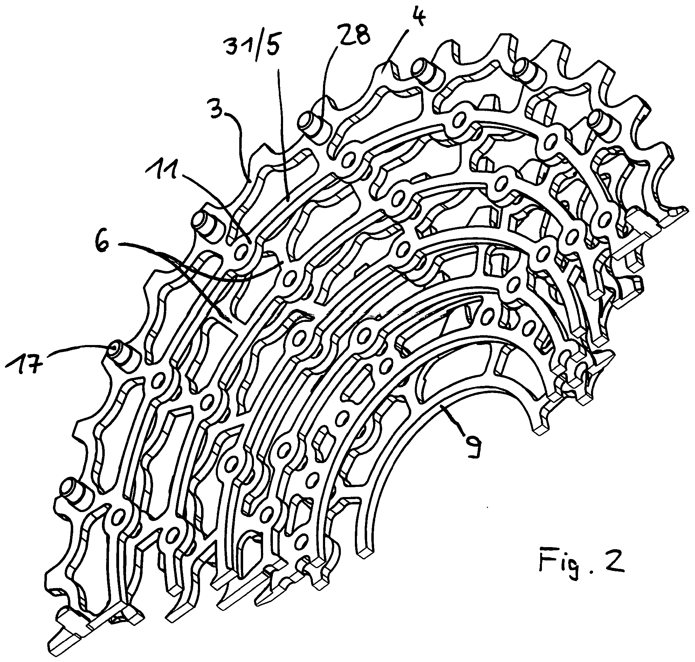

In Fig. 2 ist die Ritzelanordnung aus Fig. 2 von der Seite des größten Ritzels perspektivisch dargestellt. Die Stifte 7 zwischen den Einzelritzeln 1, 2 sind ebenso wie das Abschlussritzel 16 nicht dargestellt.

Mit dem Bezugszeichen "9" ist eine Radialabstützung am kleinsten dargestellten Einzelritzel angesprochen, die in dem in Fig. 1 dargestellten Ausführungsbeispiel gegenüber dem nächst kleineren Ritzel wirkt, die aber in einem anderen Ausführungsbeispiel auch direkt gegenüber dem Antreiber 27 wirken könnte. Die Umfangsstege 31 sind Bestandteil eines durchgehenden Innenringes 5, der in einer anderen Ausführungsform auch unterbrochen sein kann.

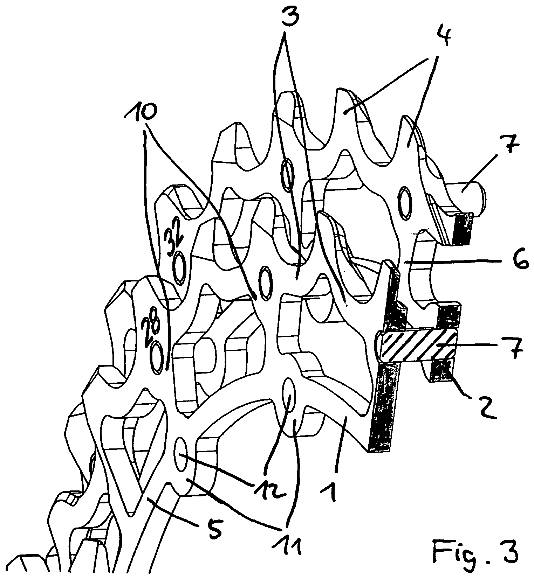

Die Fig. 3 zeigt ein großes Einzelritzel 2 und ein kleines Einzelritzel 1 und somit die kleinste und erweiterungsfähige Einheit, auf die Anspruch 1 gerichtet ist. Gut zu erkennen ist ein im Schnitt dargestellter Stift 7 als Verbindungselemente zwischen den Einzelritzeln 1, 2.

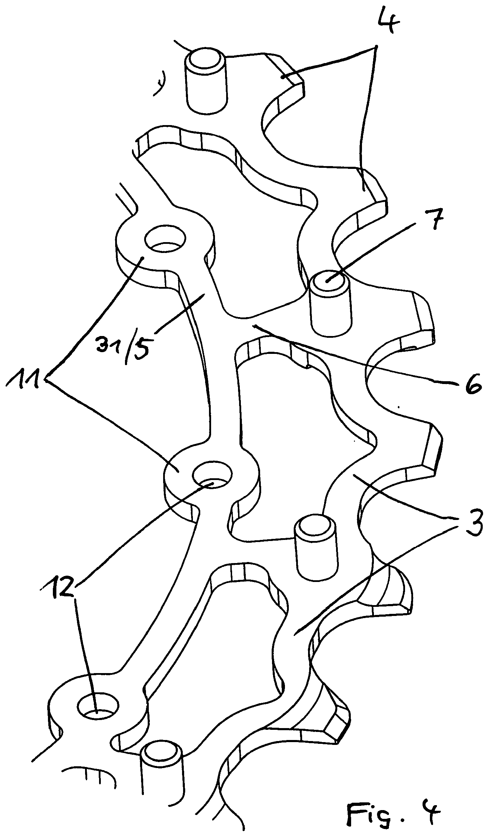

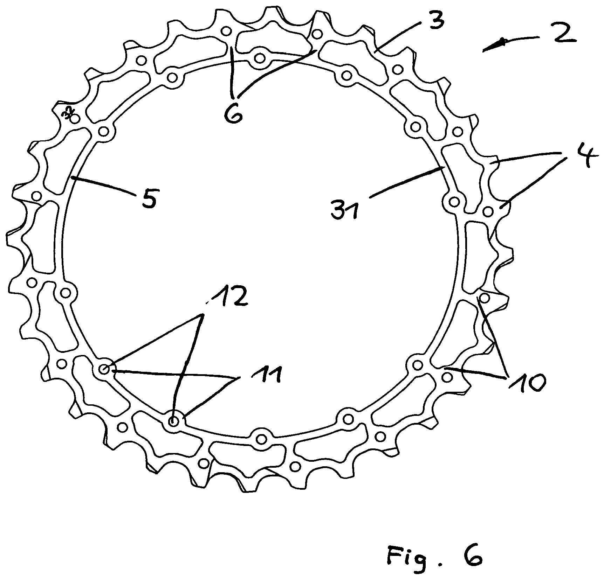

Die Figuren 4 bis 6 zeigen die Details der Einzelritzel 1, 2, auf deren Aufbau und Funktion im Folgenden eingegangen wird.

Wie gut in Fig. 3 zu erkennen ist, wird ein kleines Einzelritzel 1 der erfindungsgemäßen Mehrfach-Ritzelanordnung mittels Stiften 7 mit dem nächst größeren Ritzel 2 verbunden. Das kleinere Ritzel 1 weist ebenso wie das größere Ritzel 2 Lochungen 12 in inneren Stiftaugen 11 auf. In Umfangsrichtung benachbarte innere Stiftaugen 11 sind durch Umfangsstege 31 verbunden und bilden einen Innenring 5. Die Verbindung zwischen den im Innenring 5 angeordneten inneren Stiftaugen 11 und dem Außenring 3 wird unter Einbeziehung von Radialstegen 6 hergestellt, die sich radial zwischen den äußeren Stiftaugen 10 im Außenring 3 und dem Innenring 5 erstrecken. Der Innenring 5 schließt sich an die Radialstege 6 an. Die inneren Stiftaugen 11 mit jeweils einer Lochung 12 sind dort positioniert, wo die Stifte 7 des nächst kleineren, benachbarten Einzelritzels 1 enden.

Die Anordnung von Außenring 3, Radialstegen 6 und Innenring 5 bietet besonders gute Steifigkeitswerte gegen Ovalisieren, was einer Deformation der Struktur in radialer Richtung entspricht. Der Innenring 5 muss nicht geschlossen sein, er kann auch aus einzelnen getrennten Segmenten in Umfangsrichtung bestehen. Ein Radialsteg 6 kann sich auch ausgehend von einem inneren Stiftauge 11 radial bis zum Außenring 3 erstrecken.

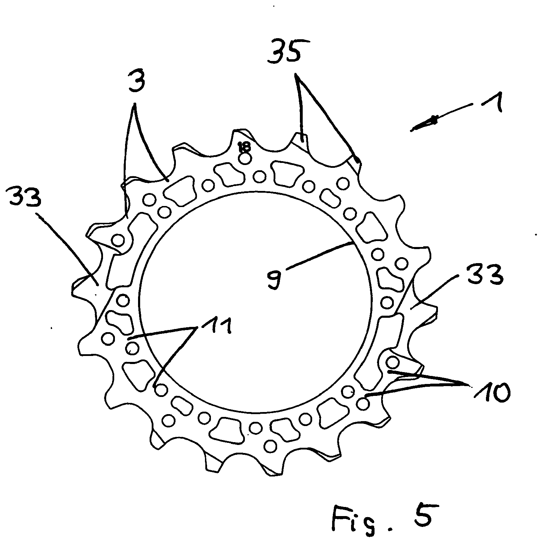

Bei einem kleineren Ritzel 1 mit besonders kleiner Zähnezahldifferenz zum nächsten benachbarten kleineren Ritzel 1, wie in Fig. 5 dargestellt, sind die inneren Stiftaugen 11 so platziert, dass sie mit übernehmen, den Innenring 5 mit dem Außenring 3 zu verbinden. Radialstege 6 können hier entfallen. Die inneren Stiftaugen 11 sind dann mit äußeren Stiftaugen 10 oder mit dem Außenring 3 verbunden, wie in Fig. 5 dargestellt.

Der Innenring 5 weist einen im Wesentlichen kreisringförmigen Aufbau mit einer im Wesentlichen gleichbleibenden Ringbreite in radialer Richtung auf. Keine gleichbleibende Ringbreite existiert an den am Innenring 5 vorgesehenen inneren Stiftaugen 11. Der Innenring 5 kann auch als Polygon ausgebildet sein, wenn die Umfangsstege 31 einen geraden Verlauf zwischen den inneren Stiftaugen 11 aufweisen.

Der Außenring 3 hat einen bandförmigen Aufbau, wobei das Band im Wesentlichen über eine gleichbleibende Breite in radialer Richtung verfügt. Die Außenkontur des Bandes ist durch die Form der Zähne vorgegeben, die Innenkontur des Bandes folgt der Außenkontur wesentlich im gleichbleibenden Abstand. Ein anderer Abstand ist dort zu finden, wo am Außenring 3 äußere Stiftaugen mit einer konzentrischen Lochung 12 für die Aufnahme von Stiften 7 vorgesehen sind und wo stark asymmetrische Zähne vorhanden sind. Diese äußeren Stiftaugen 10 befinden sich radial innerhalb von den Zähnen 4 und symmetrisch zur Kontur der Zähne und sind somit in den Außenring integriert. Damit wird erreicht, dass die Stifte 7 auch noch radial weit außen von genügend Material des Zahnes 4 selbst umgeben sind. Wären diese äußeren Stiftaugen 10 radial unterhalb des Zahngrundes angeordnet, könnten sie nur weiter radial innen platziert werden, unter Einhaltung eines Mindestabstandes zur Kontur des Zahngrundes.

Eine Platzierung der äußeren Stiftaugen 10 möglichst weit radial außen ist vorteilhaft, weil sich so ein kürzerer Hebelarm der am Zahn angreifenden Kontaktkräfte von der Rolle der Rollenkette ergibt. Auch wird auf diese Weise ermöglicht, außen am Ritzel anhaftenden Schmutz an den Ritzeln und an den Stiften 7 vorbei nach radial innen zu befördern, ohne dass es zu einem Ansammeln von Schmutz und zu dessen Verfestigung durch Druckkräfte von der Rollenkette kommen kann. Die äußeren Stiftaugen 10 mit ihrer Lochung können nur so weit nach radial außen gesetzt sein, dass die in den Lochungen 12 eingesetzten Stifte 7 nicht mit den Außen- und Innenlaschen der Rollenkette 13 kollidieren, die beim Eingriff der Rollenkette seitlich den Zahn 4 passieren. Es ist ein kleiner radialer Zwischenraum zwischen Stift 7 und Kettenlasche 14 der Rollenkette vorgesehen.

Die äußeren Stiftaugen 10 sind bevorzugt jedem zweiten Zahn 4 zugeordnet. Dieses Prinzip ist bei ungeraden Zähnezahlen und bei notwendigen Schalthilfen in der Form von Einprägungen an den Zähnen durchbrochen. An sehr kleinen Einzelritzeln sind an einer größeren Anzahl von Zähnen in Folge äußere Stiftaugen 10 zugeordnet.

Zwischen dem beschriebenen kleineren Ritzel 1 und dem größeren Ritzel 2 sind weitere Ritzel anordenbar. Ist genau ein weiteres mittleres Ritzel vorhanden, dann handelt es sich um eine Dreifachanordnung. In dieser Dreifachanordnung weisen das mittlere Ritzel und das benachbarte kleinste Ritzel einerseits sowie das größte Ritzel und das benachbarte mittlere Ritzel andererseits in Bezug auf die Anordnung der Stifte 7 und auf die Verhältnisse der Verbindung die gleichen Verhältnisse auf. Sie sind ebenso aufgebaut und wirken ebenso zusammen wie die vorstehend beschriebene Anordnung des kleineren Ritzels 1 und des größeren Ritzels 2.

Es hat sich herausgestellt, dass eine Breite des Bandes am Außenring 3 und eine Breite des Ringes am Innenring 5 näherungsweise in der Größe der Materialdicke des Ritzels einen günstigen Kompromiss in Hinsicht auf möglichst niedriges Gewicht und gute Herstellbarkeit darstellt. Ebenso ergeben sich günstige Verhältnisse, wenn der Durchmesser des Stiftes 7 etwa dem 1- bis 1,5-fachen der Materialdicke des Ritzels entspricht. Die Materialdicke liegt bei etwa 2 Millimeter bei einem Ritzel für ein Mountainbike und bei 1,6 bis 1,8 Millimeter bei einem Ritzel für ein Rennrad.

Die Stiftaugen 10, 11 müssen dem Stift 7 einen sicheren Halt bieten, was bei der Wahl des Durchmessers des Stiftauges von etwa dem dreifachen des Durchmessers des Stiftes 7 gegeben ist. Ein Stift mit einem Durchmesser von 2,5 Millimeter ist ausreichend starr und bruchfest. Die gewählte Position des Stiftes 7 im Außenring 3 symmetrisch zum Zahn hat die Konsequenz, dass der Zahn beim Angriff der Kettenrolle leicht federnd nachgibt. Es hat sich herausgestellt, dass damit die Zugkraft aus der Kette auf eine größere Anzahl von Zähnen verteilt wird, was die maximal mögliche Kettenzugkraft erhöht und den Verschleiß an den Zähnen verringert. Die zwischen zwei Zähnen 4 mit äußerem Stiftauge 10 angeordneten Zähne 15 ohne Stiftauge sind noch flexibler an den benachbarten Zähnen 4 aufgehängt, so dass sich hier der Effekt der Verteilung der Kettenzugskräfte auf mehrere Zähne noch mehr auswirkt. Außerdem ergibt sich hierdurch eine Verteilung der Kräfte auf mehrere Elemente der Tragstruktur, und demzufolge werden die einzelnen Elemente der Tragstruktur noch geringer belastet.

Die Stifte 7 können mit oder ohne Anlagebund 34 versehen sein, der dem Stift eine sichere Anlage in Längsrichtung bei der Montage und bei der Nutzung bietet. Ebenso kann durch die Wahl eines Übermaßes zwischen dem Durchmesser des Stiftes und dem Innendurchmesser der Lochung ermöglicht werden, dass sich beim Einpressen des Stiftes in die Lochung eine umlaufende Wulst geringer Höhe ergibt, die als Anlagebund wirkt. Schließlich kann die Mehrfach-Ritzelanordnung im montierten Zustand mit einer Oberflächenbeschichtung versehen werden, wodurch der Bereich des Stiftes außerhalb der Lochung ein Aufmass erhält, das sich ebenfalls wie ein Anlagebund 34 auswirkt und verhindert, dass sich der Stift während der Nutzung in Längsrichtung verschiebt und eine Bewegung der Einzelritzel 1, 2 in Axialrichtung aufeinander zu macht. Damit sich die Ritzel nicht in Axialrichtung voneinander weg bewegen können, sind die sich radial nach innen abstützenden Ritzel in Axialrichtung aufeinander zu vorgespannt durch entsprechende Anschläge am Antreiber bzw. am Außenring eines Lagers einerseits sowie eine nicht dargestellte Abschlussschraube.

An einem kleineren Ritzel einer Gruppe von Ritzeln, dem Stützritzel 32, ist radial innen am Innenring 5 eine Radialabstützung 9 zum Antreiber 27 vorgesehen, um die Ritzelgruppe an einer Seite radial abzustützen. Am größten Ritzel dieser Ritzelgruppe ist ein Abschlussritzel 16 montiert, das die Ritzelgruppe an der anderen axialen Seite radial abstützt.

Dieses Abschlussritzel 16 erfüllt mehrere Aufgaben in Hinsicht auf die Fixierung der Mehrfach-Ritzelanordnung und auf die Übertragung des von der Kette stammenden Drehmomentes auf den Antreiber.

Die Einzelritzel weisen Einprägungen 33 an den Planflächen und Zahnabschrägungen 35 an den Zähnen auf. Die Einprägungen 33 sind Bestandteil einer Schaltgasse entlang der sich die Kette beim Umschaltvorgang von einem kleineren zum größeren und auch beim umgekehrten Umschaltvorgang bewegt. Die Einprägungen 33 bieten den Kettengliedern Raum, der an anderen Positionen am Ritzel nicht bereitgestellt ist. Damit wird ein gezieltes Umschalten nur an günstigen Positionen ausgeführt. Die Zahnabschrägungen dienen dazu, die durch die Kettenführung des Kettenschaltwerkes in axialer Richtung ausgelenkte Kette am betreffenden Zahn nicht zum Eingriff kommen zu lassen. Innerhalb von Einprägungen 33 wird keine Lochung für die Aufnahme eines Stiftes 7 vorgesehen. Dort wo das möglich ist, wird eine Einprägung so verkleinert, dass die Lochung nicht in der Einprägung 33 positioniert ist.

Eine Vielzahl von Abschlussstiften 17 ist angeordnet zwischen dem großen Ritzel 2 und dem Abschlussritzel 16. Ihre Position ist wiederum bestimmt durch die Position der Zähne am großen Ritzel 2, das in der Anordnung vom großen Ritzel 2 und Abschlussritzel 16 als das kleine Ritzel zu betrachten ist und deshalb die Position der Stiftaugen vorgibt. Zentral im Abschlussritzel befindet sich eine Öffnung 18, in die bei der Montage der Mehrfach-Ritzelanordnung der Antreiber 27 eingeschoben wird. Mitnahmevorsprünge 19 am Rand der Öffnung 18 dienen der Übertragung eines Drehmomentes, das infolge der an einem Ritzel angreifenden Kettenzugkräfte K zwischen Abschlussritzel 16 und Antreiber wirkt.

Das Abschlussritzel 16 weist einen Innenbereich 20, einen Außenbereich 21 und Verbindungsarme 22 auf. Die Verbindungsarme 22 erstrecken sich zwischen dem Außenbereich 21 und dem Innenbereich 20 und sind in Antriebsdrehrichtung D von der radialen Richtung abweichend ausgerichtet. Dadurch werden sie auf Druck belastet, ihre maximal mögliche Länge ist durch die von ihnen aufzunehmende Druckkraft bestimmt, die unterhalb ihrer kritischen Knicklast liegen muss. Deshalb kann der Innenbereich eine größere Breite in radialer Richtung aufweisen. Zur Gewichtsreduzierung sind Ausstanzungen 23 vorgesehen, wodurch ebenfalls auf Druck belastete Innenarme 24 gebildet werden. Der Außenbereich 21 kann auf verschiedene Weise gestaltet werden. Ist er als Ring ausgebildet, ist in ihm eine umlaufende Nut auf der Planseite des Ritzels vorgesehen, um Gewicht zu sparen und um die Steifigkeiten des mit Zähnen 4 versehenen radial äußeren Abschluss-Zahnringes 30 und der radial innen angeordneten Partie des Außenbereiches 21 in ein günstiges Verhältnis zu bringen.

In einer anderen Ausführungsform des Außenbereichs 21 sind je zwei Zusatzarme 29 zwischen dem Verbindungsarm 22 und dem Abschluss-Zahnring 30 vorgesehen. An den Punkten der Einmündung der zwei Zusatzarme 29 in den Verbindungsarm 22 sind wiederum Lochungen 15 für die Aufnahme von Abschlussstiften 8 vorgesehen. Diese Stifte 8 können einen größeren Durchmesser als die Stifte 7 zum Verbinden der übrigen großen und kleineren Ritzel 1, 2 aufweisen, um diesen Abschlussstiften 8 einen ausreichenden Halt im Abschlussritzel 16 zu bieten, das aus Aluminium hergestellt sein kann.

Das Abschlussritzel 16 kann eben sein, oder der Innenbereich 20 ist gegenüber dem Außenbereich 21 in axialer Richtung versetzt, um die Zähne 4 am Abschlussritzel 16 näher an die Speichen des Laufrades zu bringen, damit ein größerer Bauraum für eine größere Anzahl von Ritzeln bereitgestellt werden kann.

An der Innenperipherie der Öffnung 18 weist das Abschlussritzel 16 Mitnahmeelemente 19 auf. Diese können in Achsrichtung über die Planflächen des Abschlussritzels herausragen, um optimale Eingriffsverhältnisse zwischen dem Abschlussritzel und Antreiber zu erhalten. Das Abschlussritzel muss eine genügend große Stabilität gegen Schüsselung, das heißt gegen eine Deformation des zentralen Bereiches in axialer Richtung aus der Ebene der Erstreckung des Abschlussritzels 16 heraus aufweisen, andernfalls würde bei seitlich angreifenden Kettenzugskräften eine zu große Deformation eintreten.

Die beschriebenen Abschlussritzel können auch in Verbindung mit einer einstückigen Mehrfach-Ritzelanordnung nach der eingangs genannten DE 10 2008 010 904 Verwendung finden.

Die Mitnahmeelemente 19 sind auch am kleinen Ritzel 1 anordenbar, und zwar alternativ oder zusätzlich zu den beschriebenen Mitnahmeelementen am Abschlussritzel 16. Allerdings hat sich die Anordnung am Abschlussritzel 16 als vorteilhaft herausgestellt. Werden die Mitnahmeelemente 19 am Abschlussritzel und zusätzlich am kleinen Ritzel 1 angeordnet, kann es passieren, dass im Extremfall alle Kräfte vom Mehrfachritzel auf den Antreiber trotzdem nur vom kleinen Ritzel übertragen werden. Es ergäbe sich somit ein erhöhter Fertigungs- und Montageaufwand, ohne einen Zugewinn an Sicherheit beim Kontakt mit dem Antreiber.

Liegen Mitnahmeelemente ausschließlich am kleinen Ritzel 1 vor, dann kann es zu örtlichen Überlastungen kommen, weil einzelne Radialstege 6 und Abschnitte im Außenring 3 oder im Innenring 5 überlastet werden. Bei Mitnahmeelementen ausschließlich am Abschlussritzel 16 weist dessen Innenbereich 20 eine größere Stabilität für die Übertragung der Kontaktkräfte zum Antreiber auf. Es ergibt sich eine Verteilung von Belastungen auf mehrere Mitnahmeelemente. Erfolgt eine Krafteinleitung auf die Mehrfach-Ritzelanordnung durch einen Eingriff der Kette an einem vom Abschlussritzel 19 beabstandeten Ritzel, dann verteilen sich die Kräfte auf mehrere Bestandteile der Tragstruktur und werden demzufolge auch auf mehrere Verbindungsarme 22 verteilt. Außerdem sind die Elemente der Tragstruktur am Abschlussritzel 16 ohnehin schon stabiler ausgebildet. Das führt insgesamt zu einer unkritischeren Lastverteilung.

Die Stifte 7 weisen an ihren Enden schon aus fertigungstechnischen Gründen Fasen 52 auf und sind dort nicht scharfkantig. Beim Anstreben von scharfkantigen Enden könnte noch ein Grat vorhanden sein, der bei den Einpressvorgängen des betreffenden Stiftes 7 in die Lochung 12 des Stiftauges 10, 11 hinderlich wäre. Scharfkantige Enden scheiden deshalb aus. Die Fasen 52 erleichtern das Einfädeln des Endes des Stiftes 7 in die Lochungen 12 der Stiftaugen 10, 11. Andererseits tritt damit eine geringere Überdeckung zwischen der Außenoberfläche des Stiftes 7 und der Innenoberfläche der Lochung 12 im Stiftauge 10, 11 am Ritzel 1, 2 ein. Diese geringere Überdeckung reduziert die Qualität der Ritzel-Stift-Verbindung in Hinsicht auf deren Festigkeit und Haltbarkeit, auch bei den zwischen Maximal- und Minimalwerten wechselnden, durch die Ritzel-Stift-Verbindung zu übertragenden Kräfte.

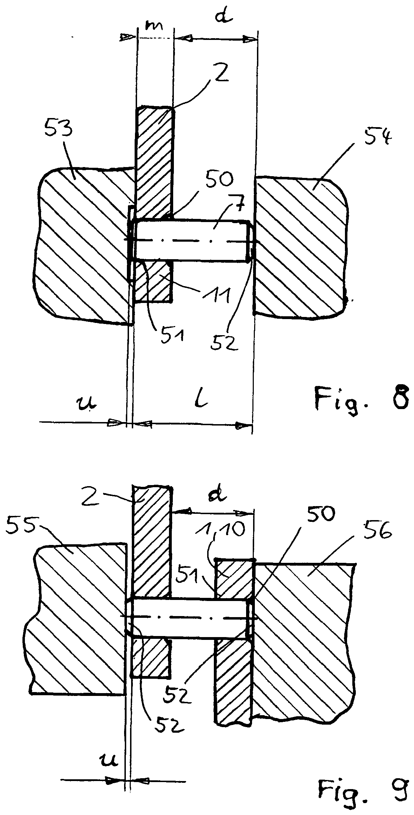

Ebenfalls die Lochungen 12 in den Ritzeln 1, 2 sind nicht an ihren beiden Enden scharfkantig. Vorgegeben durch die Stanzrichtung beim Ausstanzen der Ritzel 1, 2 besteht an der einen Seite ein unvermeidbarer Stanzeinzug 50, der wie eine umlaufende Innenfase in Erscheinung tritt. Infolge von Schalthilfen, die in größerem Umfang an der zum nächst kleineren Ritzel 1 weisenden Seite des Ritzels 2 vorhanden sind, wird eine Stanzrichtung gewählt, die an der zum nächst größeren Ritzel 2 weisenden Seite ein scharfkantiges Ende 51 der Lochung 12 und an der zum nächst kleineren Ritzel 1 weisenden Seite eine Lochung 12 mit Stanzeinzug 50 ergibt, wie dargestellt in den Figuren 8 und 9.

Ein weiterer Aspekt eines aus Einzelritzeln 1, 2 bestehenden Ritzelkörpers, wobei die Einzelritzel 1, 2 mit Stiften 7 verbundenen sind, besteht in der notwendigen Einhaltung von exakten Ritzelabständen.

Damit bei Umschaltvorgängen ein einwandfreies Eingreifen der Rollenkette 13 gewährleistet wird, ist auch ein genauer und definierter Ritzelabstand d der Ritzel zwischen den jeweils zu den nächst kleineren Ritzeln weisenden Seiten der Ritzel 1, 2 zueinander nötig. Da aber die Materialdicken der Einzelritzel aus Gründen der Fertigung variieren, können beim Zusammenbau der Ritzelanordnung Unregelmäßigkeiten bei den Ritzelabständen d auftreten. Werden mehrere Ritzel zusammengefügt, können sich ihre Toleranzen aufsummieren. Folglich kann, je nach Ritzelanzahl, der Abstand vom größten bis zum kleinsten Einzelritzel infolge der Ritzeldickentoleranzen bis zu einem Millimeter vom Sollmaß abweichen. Dieser Abstand lässt daraufhin keinen ordnungsgemäßen Eingriff der Kette an den Ritzelzähnen zu und erschwert außerdem die Umschaltvorgänge.

Wird bei der Montage von mehreren Einzelritzeln mittels der Stifte zu einer Baueinheit als Bezugsfläche die zum nächst kleineren Ritzel weisende Planfläche herangezogen, ergibt sich eine weitere Komplikation. Diese Fläche eignet sich nur sehr eingeschränkt als Auflagefläche auf eine Montageeinrichtung beim Fügen von mehreren Ritzeln 1, 2 mittels der Stifte 7. Von dort ausgehend sind bevorzugt Formelemente angeordnet, die als Schalthilfen dienen. Diese geben der vom betreffenden zu einem anderen Ritzel wechselnden Kette Raum zum Auf- und Ablaufen. Je mehr Formelemente vorhanden sind, desto weniger Auflagefläche bleibt für den Zusammenbau. Hierfür müsste mit großem Aufwand eine Montageeinrichtung konstruiert werden, die als passendes Gegenstück bei wenig Auflagefläche eingesetzt werden kann und den punktuellen hohen Druckbelastungen standhält.

Um das Problem der aufsummierten Toleranzen zu umgehen, müssen die unterschiedlich möglichen Materialdicken m der Einzelritzel 1, 2 bereits beim Zusammenbau ausgeglichen beziehungsweise kompensiert werden. Dieser Ausgleich lässt sich über zwei einfache und kostengünstige Verfahrensschritte realisieren, mittels derer das Erfordernis einer komplizierten Montageeinrichtung ebenfalls wegfällt.

In einem ersten Montageschritt, wie in Fig. 8 gezeigt, wird ein Stift 7 durch die eine Seite der Lochungen 12 der inneren Stiftaugen 11 des Innenrings 5 des größeren Einzelritzels 2 in Axialrichtung A eingepresst, bis auf der gegenüberliegenden Seite ein definierter Überstand u entsteht. Ein Überstand in der Größe der Fasenhöhe hat sich als zweckmäßig erwiesen.

Bei diesem Vorgang wird ausgenutzt, dass die Fertigung der Stifte mit einer sehr engen Längentoleranz möglich ist. Außerdem profitiert diese Methode auch von der angesprochenen Eigenschaft der Lochungen 12, die scharfkantig oder mit Stanzeinzug vorliegen können. Es hat sich als besonders vorteilhaft herausgestellt, die noch einzeln vorliegenden Stifte von der mit einem Stanzeinzug versehenen Seite in die Lochung 12 einzupressen.

Würde in der Alternativ-Variante ein Stift 7 durch die Lochung 12 im inneren Stiftauge 11 von der Seite mit dem Stanzeinzug 50 in Axialrichtung A nur soweit eingepresst, bis die Stiftoberseite ebenbündig mit der Rückseite des Einzelritzels wäre, wobei es nicht zu einem Überstand u käme, bestände aufgrund der Fase des Stiftes 7 zusätzlich zum Stanzeinzug weniger Einpress- bzw. Kontaktfläche zwischen dem Stift 7 und der Oberfläche der Lochung 12 des inneren Stiftauges 11. In diesem Fall wäre das Risiko groß, dass sich ein Stift 7 durch die zwischen Maximal- und Minimalwert schwankenden Scherkräfte aus der Lochung 12 des inneren Stiftauges 11 löst und die Stabilität der Ritzelanordnung gefährdet. Wird aber Stift 7 über die Planfläche des größeren Einzelritzels herausgeschoben, gewinnt die Verbindung nicht nur über die größere Überdeckung und Kontaktfläche an Festigkeit. Auch die scharfkantige Stanzkontur 51 der Lochung 12 des inneren Stiftauges 11, die nun mit dem glatten Stift 7 in Kontakt ist, sorgt für eine größtmögliche Überdeckung an der Ritzel-Stift-Verbindung und eine gute Fixierung des Stifts 7 in der Lochung 12. Ein Lösen oder Herauswandern des Stiftes 7 aus der Lochung 12 des Innenrings 5 wird mit diesem ersten Einpress-Schritt auf einfache Weise in Form dieser Presspassung über die maximal mögliche Länge unterbunden, und eine ausreichende Festigkeit der Verbindung aus Stift 7 und dem größeren Einzelritzel 2 ist garantiert. Somit erzeugt der Überstand dieser Ritzelstiftverbindung durch die maximal mögliche Überdeckung eine derartige Verbesserung von Stabilität und Festigkeit, wie sie besser nicht möglich ist.

Auf der zum nächst kleineren Ritzel 1 weisenden Seite des angesprochenen Einzelritzels 2 können die Einpressverhältnisse nicht weiter optimiert werden, denn die Lochung weist zwangsläufig einen Stanzeinzug auf, der für sich allein schon eine Reduzierung der Überdeckung bringt.

Die Materialdicke m hat neben dem Distanzmaß I an den Werkzeugen direkten Einfluss auf den Ritzelabstand d. Wenn das Distanzmaß I an den Werkzeugen zum Einpressen beim ersten Montageschritt beibehalten wird, ergeben sich bei sich ändernden Materialdicken unterschiedliche Ritzelabstände.

Die Materialdicke m kann sich bevorzugt von einer Materialcharge zur anderen, seltener innerhalb einer Materialcharge ändern. Damit bei der Änderung der Materialdicke m trotzdem derselbe Ritzelabstand d erreicht wird, muss durch entsprechende Veränderung an den Werkzeugen beim ersten Montageschritt gegengesteuert werden. Dabei wird das Distanzmaß I verändert.

Ein weiterer Vorteil des ersten Montageschrittes mit dem Erzeugen eines definierten Überstandes u besteht darin, dass der dabei entstehende Vorstand des Stiftes 7 auf der anderen Seite als Stütz- und Auflagefläche für die weitere Pressung im nächsten Montageschritt genutzt werden kann.

In einem zweiten Montageschritt, wie in Fig. 9 gezeigt, wird ein nächst kleineres Einzelritzel 1 mit dem größeren Einzelritzel 2 aus Schritt eins verbunden. Dabei werden die konzentrischen Lochungen 12 der äußeren Stiftaugen 10 des Außenrings 3 des kleineren Einzelritzels 1 mit den Stiften gefügt und auf diese aufgepresst. Das kleinere Einzelritzel 1 wird relativ zum größeren Einzelritzel 2 in Axialrichtung A so weit aufgepresst, bis die Enden der Stifte mit den Enden der Lochungen 12 im kleineren Ritzel 1 ebenbündig abschließen. Wie aus Fig. 9 ersichtlich ist, befindet sich dabei die Stanzkontur mit Stanzeinzug 50 an der axialen Position der Fase 52 am Stift 12.

Würde in einer Alternativ-Variante das Stiftende über die Lochung hervorstehen, könnte keine weitere Überdeckung gewonnen werden. Demnach erzeugt auch diese Lagezuordnung von Stiftende und Lochung die maximal mögliche Überdeckung mit maximal möglicher Festigkeit.

An dem zum nächst größeren Ritzel 2 weisenden Ende der Lochung 12 können die Einpressverhältnisse auch nicht weiter optimiert werden, denn die scharfkantige Lochung 51 weist schon eine optimale Überdeckung mit dem glatten Stiftabschnitt auf.

Mittels dieser beiden einfachen Montageschritte lassen sich die Ritzel kostengünstig fügen und miteinander fest justieren. Der erforderliche Abstand d zwischen den einzelnen Ritzeln 1, 2, gemessen von der äußeren Oberfläche des größeren Einzelritzels 2 zur äußeren Oberfläche des nächst kleineren Einzelritzels 1, wird eingehalten. Diese Methode hält die Abweichungen minimal, eine aufsummierte Abweichung ist vertretbar klein und eine zuverlässige Verbindung zwischen Stift 7 und der Lochung 12 des inneren Stiftauges 11 wird ermöglicht.

Es wäre in einer abgewandelten Form der erfindungsgemäßen Ritzelanordnung auch möglich, mit Stanzeinzügen versehene Lochungen an der dem benachbarten größeren Ritzel zugeordneten Seite vorzusehen.

Entsprechend der beschriebenen Vorgehensweise werden weitere Stifte in einem einzelnen Ritzel oder einer vormontierten Anordnung von mehreren Ritzeln eingepresst und dann auf diese Stifte ein weiteres einzelnes Ritzel aufgepresst. Ebenso wäre möglich, Stifte in einem einzelnen Ritzel einzupressen und dann auf diese Stifte eine vormontierte Anordnung von mehreren Ritzeln aufzupressen. Das einzelne Ritzel, in das die Stifte eingepresst werden, wäre dann das kleinere Ritzel.

## Patentansprüche

1. Mehrfach-Ritzelanordnung mit einer Vielzahl von Einzelritzeln (1, 2) für die Montage an einem Hinterrad eines Fahrrades an einem Freilaufkörper (27), der drehbar gegenüber einer Nabenachse gelagert ist und mit einer Nabenhülse in Vorwärtsdrehrichtung unverdrehbar gekoppelt wird sowie in Rückwärtsdrehrichtung gegenüber der Nabenhülse frei drehbar ist,
mit einem kleinen Einzelritzel (1) und einem großen Einzelritzel (2), die durch Stifte (7) miteinander verbunden sind;
wobei das kleine Einzelritzel (1) und das große Einzelritzel (2) einen Außenring (3) mit Zähnen (4) zum Eingriff einer Rollenkette (13), mit den Zähnen (4) zugeordneten und mit dem Außenring (3) integrierten äußeren Stiftaugen (10), sowie einer Vielzahl von mit dem Außenring (3) direkt oder indirekt einstückig verbundenen inneren Stiftaugen (11) aufweisen,
wobei sich die Position der inneren Stiftaugen (11) aus der Position der äußeren Stiftaugen (10) am benachbarten kleinen Einzelritzel (1) ergibt;
wobei die Stifte (7) zwischen Lochungen (12) in äußeren Stiftaugen (10) am kleinen Einzelritzel (1) und Lochungen (12) in inneren Stiftaugen (11) des großen Einzelritzels (2) montiert sind;
wobei die Mehrfach-Ritzelanordnung an beiden axialen Enden mittels Stiften (7) mit benachbarten Ritzeln verbunden ist, die sich direkt oder indirekt an zwei in Axialrichtung der Nabenachse beabstandeten Positionen gegenüber der Nabenachse abstützen,
**dadurch gekennzeichnet, dass**
mindestens zwei in Umfangsrichtung benachbarte innere Stiftaugen (11) durch jeweils einen geradlinigen oder gebogenen Umfangssteg (31) verbunden sind, der ein Bestandteil eines Innenringes (5) ist, und
der radial äußere Rand der Lochung (12) in einem äußeren Stiftauge (10) auf der radialen Höhe der Außenkontur in den benachbarten Zahnlücken zwischen benachbarten Zähnen (4) angeordnet ist und dass der zur Lastflanke parallele Rand der Lochung gegenüber der Lastflanke einen Abstand von etwa dem Durchmesser des Stiftes (7) aufweist.

2. Mehrfach-Ritzelanordnung nach Anspruch 1, **dadurch gekennzeichnet, dass** es je eine direkte einstückige Verbindung zwischen Außenring (3) und innerem Stiftauge (11) gibt.

3. Mehrfach-Ritzelanordnung nach Anspruch 1, **dadurch gekennzeichnet, dass** sich an einem Einzelritzel (1, 2) ein Radialsteg (6) radial zwischen dem äußeren Stiftauge (10) und dem Innenring (5) erstreckt.

4. Mehrfach-Ritzelanordnung nach Anspruch 1, **dadurch gekennzeichnet, dass** zwischen dem großen Einzelritzel (2) und dem kleinen Einzelritzel (1) einer Vielzahl von Einzelritzeln noch mindestens ein weiteres Einzelritzel (1, 2) angeordnet ist.

5. Mehrfach-Ritzelanordnung nach Anspruch 1, **dadurch gekennzeichnet, dass** ein Einzelritzel als Stützritzel (32) ausgebildet ist und eine Öffnung (18) im zentralen Bereich mit einer Radialabstützung (9) aufweist, um sich radial nach innen direkt oder indirekt am Freilaufkörper (27) abzustützen.

6. Mehrfach-Ritzelanordnung nach Anspruch 1, **dadurch gekennzeichnet, dass** ein Abschlussritzel (16) eine Zähnezahl größer als das größte Einzelritzel (1, 2) hat und im zentralen Bereich eine Öffnung (18) mit einer Radialabstützung (9) aufweist.

7. Mehrfach-Ritzelanordnung nach Anspruch 6, **dadurch gekennzeichnet, dass** das Abschlussritzel (32) an der Öffnung (18) im zentralen Bereich Mitnahmeelemente (19) aufweist.

8. Mehrfach-Ritzelanordnung nach Anspruch 1, **dadurch gekennzeichnet, dass** die Stifte (7) eingepresst sind.

9. Mehrfach-Ritzelanordnung nach Anspruch 1, **dadurch gekennzeichnet, dass** die Stifte (7) eingeklebt oder angeschweißt sind.

10. Mehrfach-Ritzelanordnung nach Anspruch 1 oder 2, **dadurch gekennzeichnet, dass** die Stifte (7) einen in ihrer axialen Richtung wirksamen Anlagebund (34) aufweisen.

11. Mehrfach-Ritzelanordnung nach Anspruch 1 oder 6, **dadurch gekennzeichnet, dass** das Abschlussritzel (16) einen Innenbereich (20), einen Außenbereich (21) und zwischen Innenbereich (20) und Außenbereich (21) angeordnete Verbindungsarme (22) aufweist.

12. Mehrfach-Ritzelanordnung nach Anspruch 11, **dadurch gekennzeichnet, dass** die Verbindungsarme (22) sich in Antriebsdrehrichtung D geneigt zwischen dem Außenbereich (21) und dem Innenbereich (22) erstrecken, wodurch sie auf Druck belastet werden.

13. Mehrfach-Ritzelanordnung nach Anspruch 11, **dadurch gekennzeichnet, dass** der Innenbereich Ausstanzungen (23) aufweist, wobei Innenarme (24) gebildet werden, die in Antriebsdrehrichtung D von radial außen nach radial innen geneigt sind, wodurch sie auf Druck belastet werden.

14. Mehrfach-Ritzelanordnung nach Anspruch 1, **dadurch gekennzeichnet, dass** mindestens ein axiales Ende des Stiftes (7) eine umlaufende Fase (52) aufweist.

15. Mehrfach-Ritzelanordnung nach Anspruch 1, **dadurch gekennzeichnet, dass** das einem größeren Ritzel zugeordnete axiale Ende des Stiftes (7) mit der Fase (52) aus der im größeren Ritzel (2) angeordneten Lochung (12) herausragt.

16. Mehrfach-Ritzelanordnung nach Anspruch 15, **dadurch gekennzeichnet, dass** das einem kleineren Ritzel (1) zugeordnete axiale Ende des Stiftes (7) mit dem Ende der Lochung (12) am kleineren Ritzel (1) ebenbündig endet.

17. Mehrfach-Ritzelanordnung nach Anspruch 15, **dadurch gekennzeichnet, dass** das einem kleineren Ritzel zugeordnete axiale Ende des Stiftes (7) mit der Fase (52) aus der im kleineren Ritzel (2) angeordneten Lochung (12) herausragt.

18. Verfahren in zwei Montageschritten zum Verbinden von zwei Einzelritzeln (1, 2) für eine Mehrfach-Ritzelanordnung nach einem der Ansprüche 1 bis 17 mittels an Enden mit Fasen (52) versehenen Stiften (7), wobei jeder Stift (7) mit seinen zwei Enden in zwei Lochungen (12) in den Einzelritzeln (1 und 2) eingepresst wird, wobei jede der zwei Lochungen (12) jeweils an einem Ende einen Stanzeinzug (50) aufweist und am anderen Ende (51) scharfkantig ausgebildet ist,
wobei ein erster Montageschritt beinhaltet, dass ein Stift (7) von der mit dem Stanzeinzug (50) versehenen Seite der Lochung (12) in die Lochung (12) so weit eingepresst wird, dass der Stift (7) mit dem Bereich der Fase (52) aus dem entgegen gesetzten Ende (51) der Lochung (12) herausragt.

19. Verfahren in zwei Montageschritten zum Verbinden von zwei Einzelritzeln nach Anspruch 18, **dadurch gekennzeichnet, dass** ein zweiter Montageschritt enthält, ein Ritzel über die im benachbarten Ritzel eingepressten Stifte (7) aufzupressen, wobei die Stiftenden in das scharfkantige Ende der zugehörigen Lochungen (12) eingepresst werden.

20. Verfahren in zwei Montageschritten zum Verbinden von zwei Einzelritzeln nach Anspruch 19, **dadurch gekennzeichnet, dass** im zweiten Montageschritt das Ende des eingepressten Stiftes (7) ebenbündig mit dem Ende der Lochung (12) im Ritzel abschließt.

21. Verfahren in zwei Montageschritten zum Verbinden von zwei Einzelritzeln nach Anspruch 18 oder 19, **dadurch gekennzeichnet, dass** sich das mit einem Stanzeinzug versehene Ende der Bohrung auf der Seite des Ritzels befindet, die zum kleineren Ritzel weist.

22. Verfahren in zwei Montageschritten zum Verbinden von zwei Einzelritzeln nach Anspruch 18 oder 19, **dadurch gekennzeichnet, dass** das mit einem Stanzeinzug versehene Ende der Bohrung sich auf der Seite des Ritzels befindet, die zum größeren Ritzel weist.

## Claims

1. Multi-sprocket assembly having a multiplicity of individual sprockets (1, 2) for assembly on a freewheeling member (27) on a rear wheel of a bicycle, said freewheeling member (27) being mounted so as to be rotatable in relation to a hub axle and being coupled to a hub sleeve so as not to be rotatable in the forward rotation direction and in the reverse rotation direction being freely rotatable in relation to the hub sleeve,
having a small individual sprocket (1) and a large individual sprocket (2) which are connected to one another by pins (7);
wherein the small individual sprocket (1) and the large individual sprocket (2) have an outer ring (3) having teeth (4) for engaging in a roller chain (13), having outer pin eyes (10) which are assigned to the teeth (4) and integrated in the outer ring (3), as well as a multiplicity of inner pin eyes (11) which are integrally connected directly or indirectly to the outer ring (3),
wherein the position of the inner pin eyes (11) is derived from the position of the outer pin eyes (10) on the adjacent small individual sprocket (1); wherein the pins (7) are assembled between perforations (12) in outer pin eyes (10) on the small individual sprocket (1) and perforations (12) in inner pin eyes (11) of the large individual sprocket (2);
wherein the multi-sprocket assembly at both axial ends, by means of pins (7), is connected to adjacent sprockets which, at two positions that are spaced apart in the axial direction of the hub axle, are supported directly or indirectly in relation to the hub axle,
**characterized in that**
at least two inner pin eyes (11) which are adjacent in the circumferential direction are in each case connected by a rectilinear or curved circumferential web (31) that is a component part of an inner ring (5), and
the radially outer periphery of the perforation (12) is disposed in an outer pin eye (10) at the radial height of the external contour in the adjacent tooth gaps between adjacent teeth (4), and **in that** the periphery of the perforation that is parallel to the load flank has a spacing from the load flank of approximately the diameter of the pin (7).

2. Multi-sprocket assembly according to Claim 1, **characterized in that** there is in each case one direct integral connection between the outer ring (3) and the inner pin eye (11).

3. Multi-sprocket assembly according to Claim 1, **characterized in that**, on an individual sprocket (1, 2), a radial web (6) extends radially between the outer pin eye (10) and the inner ring (5).

4. Multi-sprocket assembly according to Claim 1, **characterized in that** at least one further individual sprocket (1, 2) is disposed between the large individual sprocket (2) and the small individual sprocket (1) of a multiplicity of individual sprockets.

5. Multi-sprocket assembly according to Claim 1, **characterized in that** one individual sprocket is configured as a support sprocket (32) and in the central region has an opening (18) having a radial support (9) in order for said support sprocket (32) to be supported in a radially inward manner directly or indirectly on the freewheeling member (27).

6. Multi-sprocket assembly according to Claim 1, **characterized in that** a terminating sprocket (16) is larger than the largest individual sprocket (1, 2) by a tooth count of one, and in the central region has an opening (18) having a radial support (9).

7. Multi-sprocket assembly according to Claim 6, **characterized in that** the terminating sprocket (32) on the opening (18) in the central region has entrainment elements (19).

8. Multi-sprocket assembly according to Claim 1, **characterized in that** the pins (7) are press-fitted.

9. Multi-sprocket assembly according to Claim 1, **characterized in that** the pins (7) are fitted by adhesive bonding or welding.

10. Multi-sprocket assembly according to Claim 1 or 2, **characterized in that** the pins (7) have a bearing collar (34) that is effective in the axial direction of said pins (7).

11. Multi-sprocket assembly according to Claim 1 or 6, **characterized in that** the terminating sprocket (16) has an internal region (20), an external region (21) and connection arms (22) disposed between the internal region (20) and the external region (21).

12. Multi-sprocket assembly according to Claim 11, **characterized in that** the connection arms (22) extend between the external region (21) and the internal region (22) so as to be inclined in the driving rotation direction D, as a result of which said connection arms (22) are under compressive stress.

13. Multi-sprocket assembly according to Claim 11, **characterized in that** the internal region has blankings (23), wherein internal arms (24) are formed, the latter being inclined radially from the outside to the inside in the driving rotation direction D, as a result of which said internal arms (24) are under compressive stress.

14. Multi-sprocket assembly according to Claim 1, **characterized in that** at least one axial end of the pin (7) has an encircling chamfer (52).

15. Multi-sprocket assembly according to Claim 1, **characterized in that** the axial end of the pin (7) that is assigned to a larger sprocket by way of the chamfer (52) protrudes from the perforation (12) disposed in the larger sprocket (2).

16. Multi-sprocket assembly according to Claim 15, **characterized in that** the axial end of the pin (7) that is assigned to a smaller sprocket (1) terminates so as to be flush with the end of the perforation (12) on the smaller sprocket (1).

17. Multi-sprocket assembly according to Claim 15, **characterized in that** the axial end of the pin (7) that is assigned to a smaller sprocket by way of the chamfer (52) protrudes from the perforation (12) disposed in the smaller sprocket (2).

18. Method for connecting in two assembly steps two individual sprockets (1, 2) for a multi-sprocket assembly according to one of Claims 1 to 17 by means of pins (7) which are provided with chamfers (52) on ends, wherein each pin (7) by way of the two ends thereof is press-fitted in two perforations (12) in the individual sprockets (1 and 2), wherein each of the two perforations (12) has in each case one punching indentation (50) at one end and at the other end (51) is configured with a sharp edge, wherein a first assembly step comprises that a pin (7) from the side of the perforation (12) provided with the punching indentation (50) is press-fitted into the perforation (12) so far that the pin (7) by way of the region of the chamfer (52) protrudes from the opposite end (51) of the perforation (12).

19. Method for connecting in two assembly steps two individual sprockets according to Claim 18, **characterized in that** a second assembly step comprises press-fitting a sprocket over the pins (7) press-fitted in the adjacent sprocket, wherein the pin ends are press-fitted into the sharp-edged end of the associated perforations (12).

20. Method for connecting in two assembly steps two individual sprockets according to Claim 19, **characterized in that** in the second assembly step the end of the press-fitted pin (7) terminates so as to be flush with the end of the perforation (12) in the sprocket.

21. Method for connecting in two assembly steps two individual sprockets according to Claim 18 or 19, **characterized in that** the end of the bore that is provided with a punching indentation is situated on that side of the sprocket that points towards the smaller sprocket.

22. Method for connecting in two assembly steps two individual sprockets according to Claim 18 or 19, **characterized in that** the end of the bore that is provided with a punching indentation is situated on that side of the sprocket that points towards the larger sprocket.

## Revendications

1. Agencement de pignons multiples comportant une pluralité de pignons individuels (1, 2) pour le montage sur une roue arrière d'un vélo au niveau d'un corps de roue libre (27) qui est monté de manière à pouvoir tourner par rapport à un axe de moyeu et est accouplé à une douille de moyeu de manière à ne pas pouvoir tourner dans le sens de rotation vers l'avant et peut tourner librement par rapport à la douille de moyeu dans le sens de rotation vers arrière,
comportant un petit pignon individuel (1) et un grand pignon individuel (2) qui sont reliés l'un à l'autre par le biais de goupilles (7) ;
le petit pignon individuel (1) et le grand pignon individuel (2) comprenant une bague extérieure (3) dotée de dents (4) servant à l'engrènement d'une chaîne à rouleaux (13), d'œillets pour goupilles (10) extérieurs associés aux dents (4) et intégrés à la bague extérieure (3), et d'une pluralité d'œillets pour goupilles (11) intérieurs reliés d'une seule pièce directement ou indirectement à la bague extérieure (3),
la position des œillets pour goupilles (11) intérieurs découlant de la position des œillets pour goupilles (10) extérieurs au niveau du petit pignon individuel (1) adjacent ;
les goupilles (7) étant montées entre des trous (12) dans des œillets pour goupilles (10) extérieurs au niveau du petit pignon individuel (1) et des trous (12) dans des œillets pour goupilles (11) intérieurs du grand pignon individuel (2) ;
l'agencement de pignons multiples étant relié aux deux extrémités axiales au moyen de goupilles (7) à des pignons adjacents qui sont supportés directement ou indirectement par rapport à l'axe de moyeu à deux positions espacées dans la direction axiale de l'axe de moyeu,
**caractérisé en ce**
**qu'**au moins deux œillets pour goupilles (11) intérieurs adjacents dans la direction périphérique sont reliés par respectivement une nervure périphérique (31) rectiligne ou incurvée qui fait partie d'une bague intérieure (5), et
en ce que le bord radialement extérieur du trou (12) est disposé dans un œillet pour goupille (10) extérieur à la hauteur radiale du contour extérieur dans les entredents adjacents entre des dents adjacentes (4) et en ce que le bord du trou parallèle au flanc de charge présente, par rapport au flanc de charge, une distance d'approximativement le diamètre de la goupille (7).

2. Agencement de pignons multiples selon la revendication 1, **caractérisé en ce qu'**il fournit respectivement une liaison d'une seule pièce directe entre la bague extérieure (3) et l'œillet pour goupille (11) intérieur.

3. Agencement de pignons multiples selon la revendication 1, **caractérisé en ce qu'**une nervure radiale (6) s'étend radialement entre l'œillet pour goupille (10) extérieur et la bague intérieure (5) au niveau d'un pignon individuel (1, 2).

4. Agencement de pignons multiples selon la revendication 1, **caractérisé en ce qu'**encore au moins un autre pignon individuel (1, 2) est disposé entre le grand pignon individuel (2) et le petit pignon individuel (1).

5. Agencement de pignons multiples selon la revendication 1, **caractérisé en ce qu'**un pignon individuel est réalisé sous forme de pignon de support (32) et présente une ouverture (18) dans la région centrale dotée d'un support radial (9) afin d'être supporté radialement vers l'intérieur directement ou indirectement sur le corps de roue libre (27).

6. Agencement de pignons multiples selon la revendication 1, **caractérisé en ce qu'**un pignon d'extrémité (16) a un plus grand nombre de dents que le plus grand pignon individuel (1, 2) et présente dans la région centrale une ouverture (18) dotée d'un support radial (9).

7. Agencement de pignons multiples selon la revendication 6, **caractérisé en ce que** le pignon d'extrémité (32) présente des éléments d'entraînement (19) dans la région centrale au niveau de l'ouverture (18).

8. Agencement de pignons multiples selon la revendication 1, **caractérisé en ce que** les goupilles (7) sont enfoncées.

9. Agencement de pignons multiples selon la revendication 1, **caractérisé en ce que** les goupilles (7) sont collées ou soudées.

10. Agencement de pignons multiples selon la revendication 1 ou 2, **caractérisé en ce que** les goupilles (7) présentent une collerette d'appui (34) agissant dans sa direction axiale.

11. Agencement de pignons multiples selon la revendication 1 ou 6, **caractérisé en ce que** le pignon d'extrémité (16) présente une région intérieure (20), une région extérieure (21) et des bras de liaison (22) disposés entre la région intérieure (20) et la région extérieure (21).

12. Agencement de pignons multiples selon la revendication 11, **caractérisé en ce que** les bras de liaison (22) s'étendent de manière inclinée dans le sens de rotation d'entraînement D entre la région extérieure (21) et la région intérieure (22), de sorte qu'ils sont sollicités en compression.

13. Agencement de pignons multiples selon la revendication 11, **caractérisé en ce que** la région intérieure présente des découpes (23), des bras intérieurs (24) étant formés, lesquels sont inclinés radialement de l'extérieur vers l'intérieur dans le sens de rotation d'entraînement D, de sorte qu'ils sont sollicités en compression.

14. Agencement de pignons multiples selon la revendication 1, **caractérisé en ce qu'**au moins une extrémité axiale de la goupille (7) présente un biseau périphérique (52).

15. Agencement de pignons multiples selon la revendication 1, **caractérisé en ce que** l'extrémité axiale de la goupille (7) associée à un plus grand pignon fait saillie par le biseau (52) hors du trou (12) disposé dans le plus grand pignon (2).

16. Agencement de pignons multiples selon la revendication 15, **caractérisé en ce que** l'extrémité axiale de la goupille (7) associée à un plus petit pignon (1) se termine en affleurement plan avec l'extrémité du trou (12) au niveau du plus petit pignon (1).

17. Agencement de pignons multiples selon la revendication 15, **caractérisé en ce que** l'extrémité axiale de la goupille (7) associée à un plus petit
pignon fait saillie par le biseau (52) hors du trou (12) disposé dans le plus petit pignon (2).

18. Procédé à deux étapes de montage pour la liaison de deux pignons individuels (1, 2) pour un agencement de pignons multiples selon l'une des revendications 1 à 17 au moyen de goupilles (7) pourvues de biseau (52) aux extrémités, chaque goupille (7) étant enfoncée par ses deux extrémités dans deux trous (12) dans les pignons individuels (1 et 2), chacun des deux trous (12) présentant respectivement à une extrémité un retrait de découpage (50) et étant réalisé avec des arêtes vives à l'autre extrémité (51),
une première étape de montage comprenant l'enfoncement d'une goupille (7) dans le trou (12) depuis le côté du trou (12) pourvu du retrait de découpage (50), dans une mesure telle que la goupille (7) fait saillie par la région du biseau (52) hors de l'extrémité opposée (51) du trou (12).

19. Procédé à deux étapes de montage pour la liaison de deux pignons individuels selon la revendication 18, **caractérisé en ce qu'**une deuxième étape de montage comprend l'engagement par pression d'un pignon par le biais des goupilles (7) enfoncées dans le pignon adjacent, les extrémités de goupilles étant enfoncées dans l'extrémité à arêtes vives des trous (12) associés.

20. Procédé à deux étapes de montage pour la liaison de deux pignons individuels selon la revendication 19, **caractérisé en ce que** dans la deuxième étape de montage l'extrémité de la goupille enfoncée (7) se termine en affleurement plan avec l'extrémité du trou (12) dans le pignon.

21. Procédé à deux étapes de montage pour la liaison de deux pignons individuels selon la revendication 18 ou 19, **caractérisé en ce que** l'extrémité, pourvue d'un retrait de découpage, de l'alésage se trouve sur le côté du pignon qui est tourné vers le plus petit pignon.

22. Procédé à deux étapes de montage pour la liaison de deux pignons individuels selon la revendication 18 ou 19, **caractérisé en ce que** l'extrémité, pourvue d'un retrait de découpage, de l'alésage se trouve sur le côté du pignon qui est tourné vers le plus grand pignon.
